# EUROPEAN PATENT APPLICATION

(11) **EP 4 848 066 A1**
(43) Date of publication of application: **02.12.2026**
(21) Application number: 26159193.7
(22) Date of filing: 18.02.2026
(51) Int. Cl.: G06F 3/14

(54) **SCREEN PROJECTION METHOD, APPARATUS, ELECTRONIC DEVICE, STORAGE MEDIUM, AND PROGRAM PRODUCT**

(30) Priority: 30.05.2025 CN 202510727262
(71) Applicant: Beijing Zitiao Network Technology Co., Ltd., Beijing 100190 (CN)
(72) Inventor: Wang, Wenlong, Beijing, 100028 (CN); Zhao, Tengfei, Beijing, 100028 (CN); Zhang, Yongqi, Beijing, 100028 (CN); Wang, Bin, Beijing, 100028 (CN)
(74) Representative: Grünecker Patent- und Rechtsanwälte PartG mbB

(57) **Abstract**

A screen projection method and apparatus, an electronic device, a storage medium and a program product, which relate to the technical field of data processing. The method includes: acquiring a first image played at a local end in response to an enabling instruction for a target screen projection mode, where the first image includes an effective image area and image association information; determining position information of the effective image area in the first image; and sending the position information of the effective image area to a screen projection end, where the screen projection end is configured to stretch the effective image area and then play same, and a screen size of the screen projection end is inconsistent with a screen size of the local end.

## Description

### CROSS-REFERENCE TO RELATED APPLICATIONS

This application claims priority to Chinese Patent Application No. 202510727262.6, entitled "Screen projection method, device, electronic equipment, storage medium and program product", and filed on May 30, 2025.

### TECHNICAL FIELD

The present disclosure relates to the technical field of data processing, and in particular, to a screen projection method and apparatus, an electronic device, a storage medium, and a program product.

### BACKGROUND

Screen projection refers to a technology or an operation process of synchronously displaying content on an electronic device (such as a mobile phone, a computer, a tablet, etc.) and on another device with a larger screen (such as a television, a projector, a display, etc.), so as to facilitate viewing, sharing, or demonstration by a user. In the process of screen projection, since the screen sizes of the two devices are inconsistent, the processing of the projected image is involved to ensure the screen projection effect.

### SUMMARY

In view of this, the present disclosure provides a screen projection method and apparatus, an electronic device, a storage medium, and a program product to solve the problem of processing a projected image.

In a first aspect, the present disclosure provides a screen projection method, comprising: acquiring a first image played at a local end in response to an enabling instruction for a target screen projection mode, where the first image comprises an effective image area and image association information; determining position information of the effective image area in the first image; and sending the position information of the effective image area to a screen projection end, where the screen projection end is configured to stretch the effective image area and then play the stretched effective image area, and a screen size of the screen projection end is inconsistent with a screen size of the local end.

In a second aspect, the present disclosure provides a screen projection apparatus, comprising: an acquiring module, configured to acquire a first image played at a local end in response to an enabling instruction for a target screen projection mode, where the first image comprises an effective image area and image association information; a determining module, configured to determine position information of the effective image area in the first image; and a sending module, configured to send the position information of the effective image area to a screen projection end, where the screen projection end is configured to stretch the effective image area and then play the stretched effective image area, and a screen size of the screen projection end is inconsistent with a screen size of the local end.

In a third aspect, the present disclosure provides an electronic device, comprising: a memory and a processor, where the memory and the processor are communicatively connected to each other, the memory stores computer instructions, and the processor executes the computer instructions to perform the screen projection method according to the first aspect or any corresponding implementation thereof.

In a fourth aspect, the present disclosure provides a computer-readable storage medium storing computer instructions, where the computer instructions are used to cause a computer to perform the screen projection method according to the first aspect or any corresponding implementation thereof.

In a fifth aspect, the present disclosure provides a computer program product comprising computer instructions, where the computer instructions are used to cause a computer to perform the screen projection method according to the first aspect or any corresponding implementation thereof.

### BRIEF DESCRIPTION OF THE DRAWINGS

In order to more clearly describe the technical solutions in the specific implementations of the present disclosure or in the related art, the following briefly introduces the drawings required for describing the specific implementations or the related art. Obviously, the drawings in the following description show some implementations of the present disclosure, and other drawings may also be obtained by a person of ordinary skill in the art according to these drawings without creative efforts.
Fig. 1 is a schematic diagram of an application scenario according to an embodiment of the present disclosure;
Fig. 2 is a schematic diagram of a first screen projection effect in the related art;
Fig. 3 is a schematic diagram of a second screen projection effect in the related art;
Fig. 4 is a schematic diagram of a third screen projection effect in the related art;
Fig. 5 is a schematic diagram of a third screen projection effect in the related art;
Fig. 6 is a first schematic flowchart of a screen projection method according to an embodiment of the present disclosure;
Fig. 7 is a second schematic flowchart of a screen projection method according to an embodiment of the present disclosure;
Fig. 8 is a schematic diagram of a first screen projection effect according to an embodiment of the present disclosure;
Fig. 9 is a schematic diagram of a second screen projection effect according to an embodiment of the present disclosure;
Fig. 10 is a third schematic flowchart of a screen projection method according to an embodiment of the present disclosure;
Fig. 11 is a structural block diagram of a screen projection apparatus according to an embodiment of the present disclosure; and
Fig. 12 is a schematic diagram of a hardware structure of an electronic device according to an embodiment of the present disclosure.

### DETAILED DESCRIPTION

In order to make the objectives, technical solutions and advantages of the embodiments of the present disclosure clearer, the technical solutions in the embodiments of the present disclosure will be described clearly and comprehensively with reference to the drawings in the embodiments of the present disclosure. Obviously, the described embodiments are part of the embodiments of the present disclosure, but not all of the embodiments. Based on the embodiments in the present disclosure, all other embodiments obtained by a person skilled in the art without creative efforts belong to the protection scope of the present disclosure.

It may be understood that, before using the technical solutions disclosed in the embodiments of the present disclosure, the user should be informed of the type, range of use, use scenarios, etc. of personal information involved in the present disclosure in an appropriate manner and obtain the authorization of the user according to relevant laws and regulations.

For example, in response to receiving an active request from a user, prompt information is sent to the user to clearly prompt the user that the requested operation will require access to and use of the user's personal information. Thus, the user may independently choose whether to provide personal information to software or hardware, such as an electronic device, an application, a server, or a storage medium, that performs the operations of the technical solutions of the present disclosure based on the prompt information.

As an optional but non-limiting implementation, in response to receiving an active request from a user, the prompt information may be sent to the user in the form of, for example, a pop-up window, and the prompt information may be presented in the pop-up window in text. In addition, the pop-up window may also comprise a selection control for the user to select "agree" or "disagree" to provide personal information to the electronic device.

It may be understood that the above process of notifying and obtaining user authorization is only illustrative and does not limit the implementations of the present disclosure, and other methods that meet relevant laws and regulations may also be applied to the implementations of the present disclosure.

It may be understood that the data involved in the technical solution (comprising but not limited to the data itself, acquisition or use of the data) should comply with the requirements of corresponding laws, regulations and related provisions.

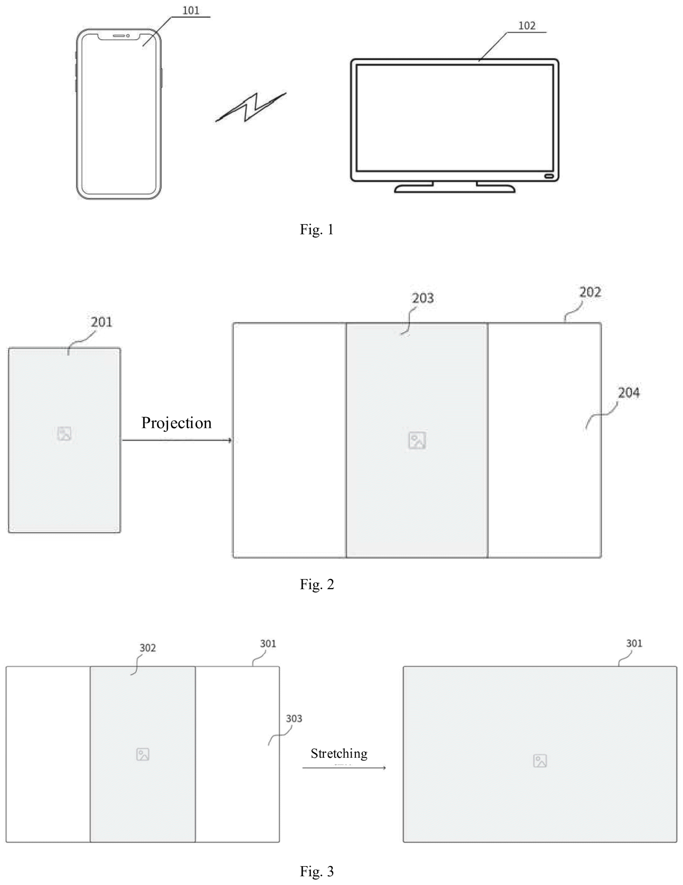

As an optional application scenario of the embodiments of the present disclosure, as shown in Fig. 1, the content played on a mobile phone 101 is projected to a television 102 for playing. Exemplarily, the mobile phone 101 plays a short video through a short video application. A screen projection control is set in the short video application, and the content played is projected to the television 102 for display through interaction with the screen projection control. Alternatively, the mobile phone 101 plays live streaming pulling through a live streaming application, and the live streaming content is projected to the television 102 for display through interaction with the screen projection control.

Certainly, the screen projection scenario is not limited to that described above, and the screen projection device is not limited to the mobile phone and the television described above, and other devices may also be used, which is not limited herein.

In the related art, taking a mobile phone image projected to a television as an example, after the mobile phone image is projected to the television, the mobile phone image is displayed in the center of the television screen. For example, as shown in Fig. 2, an image 201 is displayed on a mobile phone, and a corresponding image 203 is displayed on a television 202 through a screen projection operation, and since the screen size of the mobile phone is different from the screen size of the television, blank areas 204 are displayed on the screen of the television after the mobile phone image is projected to the television. That is, after the vertical image of the mobile phone is projected to the television, usually only a part of the area of the television is filled, and there are blank areas on two sides, which cannot fully utilize the advantages of the large screen. Without loss of generality, the blank area 204 is filled with black. In other words, after screen projection, a black filling area appears on the display screen of the television, which affects the screen projection effect.

In some related art, in order to avoid the existence of the blank area, the projected image is processed by stretching the image. The stretching manner may be simple stretching, that is, to make the size of the image displayed on the television consistent with the screen size of the television. In this manner, although all the content of the mobile phone image may be retained, the original proportion of the mobile phone image is destroyed due to the inconsistent proportion between the screen size of the mobile phone and the screen size of the television. For example, the proportion of the screen size (aspect ratio) of the mobile phone is 9:16, and the proportion of the screen size of the television is 18:9. After the mobile phone image is stretched by the above stretching manner, the image displayed on the television screen loses the original proportion. For example, as shown in Fig. 3, when the mobile phone image is projected to a television 301, if the image 302 is displayed without stretching, blank areas 303 appear on the television screen. After the stretching process, the image size is consistent with the television screen size, but the proportion represented by this size is inconsistent with the original proportion of the mobile phone image, resulting in image distortion.

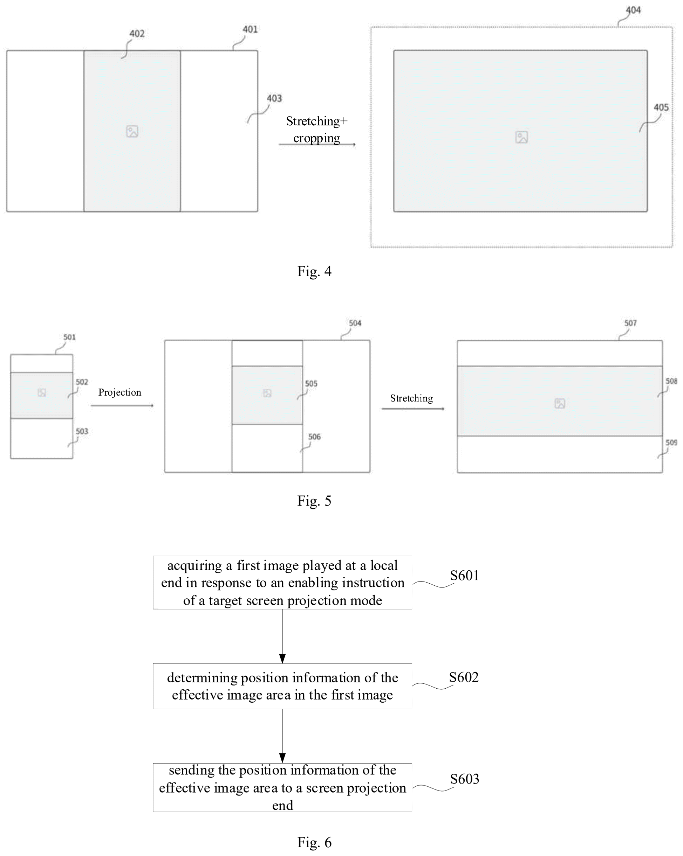

In some other related art, in order to avoid the existence of the blank area, the projected image is processed by means of equidistantly stretching and then cropping the image. Specifically, based on the center of the image as a reference point, the mobile phone image is equidistantly stretched until both the horizontal and vertical directions of the television screen are filled, and then the content beyond the canvas is cropped. For example, as shown in Fig. 4, when the mobile phone image is projected to a television 401, if the image 402 is displayed without stretching, blank areas 403 appear on the television screen, and the image 404 is obtained after the image 402 is equidistantly stretched. Since the image 404 exceeds the screen size of the television, the image 404 is cropped to obtain an image 405 that may fill the television screen. However, although this manner may retain the proportion of the image, it causes loss of content.

In some scenarios, the mobile phone image comprises not only an image but also content related to the image, comprising but not limited to comments, description content, etc. For example, as shown in Fig. 5, in a live streaming scenario, an image 502 and a comment area 503 of the image 502 are displayed on a mobile phone 501. After the screen projection processing, a corresponding image 505 and a corresponding comment area 506 are also displayed on a television 504. After processing by the stretching manner described above, an image 508 and a comment area 509 are displayed on a television screen 507. As described above, the images displayed in the two areas lose the original proportion, resulting in display distortion and affecting the screen projection effect.

Therefore, the processing manners for the projected image in the related art have respective limitations. Specifically, the simple stretching manner leads to the loss of the original image proportion (for example, the original image is flattened), and the manner of checking after equidistant stretching leads to the cropping of meaningful content and the existence of blank areas.

Based on this, in the stretching method provided in the embodiments of the present disclosure, stretching is no longer performed based on the center point of the image, but the first image being played at a local end is acquired in response to the enabling instruction for the target screen projection mode. Since the first image comprises the image association information in addition to the effective image area, and in the target screen projection mode, only the effective image area in the first image needs to be displayed for the projected image, the position information of the effective image area in the first image is determined before the screen projection information is sent, and the position information of the effective image area is sent to the screen projection end, so that the screen projection end stretches the effective image area and then plays the stretched effective image area. In the method, in the case where the target screen projection mode is enabled, the effective image area in the first image played at the local end is identified, the position information of the effective image area is determined, and the position information of the effective image area is sent to the screen projection end, so that the screen projection end stretches the effective image area and then plays the stretched effective image area. Thus, the image displayed on the screen projection end is a result of stretching the effective image area, the proportion of the effective image area in the image is increased when the image is displayed on the screen projection end, and therefore the screen projection effect is improved.

According to the embodiments of the present disclosure, an embodiment of a screen projection method is provided. It should be noted that the steps shown in the flowcharts of the drawings may be executed in a computer system, such as a set of computer executable instructions, and although the logical order is shown in the flowcharts, in some cases, the steps shown or described may be executed in an order different from that here.

In the present embodiment, a screen projection method is provided, which may be used for the electronic device described above, such as a mobile phone, etc. Fig. 6 is a flowchart of the screen projection method according to the embodiments of the present disclosure. As shown in Fig. 6, the flow comprises the following steps.

Step S601: acquiring a first image played at a local end in response to an enabling instruction for a target screen projection mode.

The first image comprises an effective image area and image association information.

The target screen projection mode is stretch screen projection based on the effective image area described in the embodiments of the present application, and the non-target screen projection mode described below is simple stretching or equidistant stretching followed by cropping and then projecting the screen in the related art. The screen projection mode may be determined by a user in an interactive manner before screen projection. Alternatively, a screen projection mode selection control is displayed on an interface after screen projection, and the screen projection mode is determined through interaction with the corresponding selection control, etc. Certainly, the screen projection mode may also be implemented in other manners, which is not limited herein.

The enabling instruction for the target screen projection mode may be generated after the screen projection mode is determined, or may be automatically generated after the current service scenario is detected. For example, after establishing a screen projection connection with the screen projection end, the terminal may analyze the service scenario of the image played by the terminal to determine whether the target screen projection mode needs to be enabled. The service scenario of the image comprises but is not limited to whether the layout of the image has changed, or the proportion of the effective image in the entire image, etc.

The first image played at the local end is the image being played by the terminal, and the image comprises the effective image area and the image association information. The effective image area is configured to characterize an area that needs to be projected, and the image association information is configured to characterize information related to the currently played image, such as comments on the played image, description information for the played image, or blank areas left when the played image does not fill the entire screen, etc.

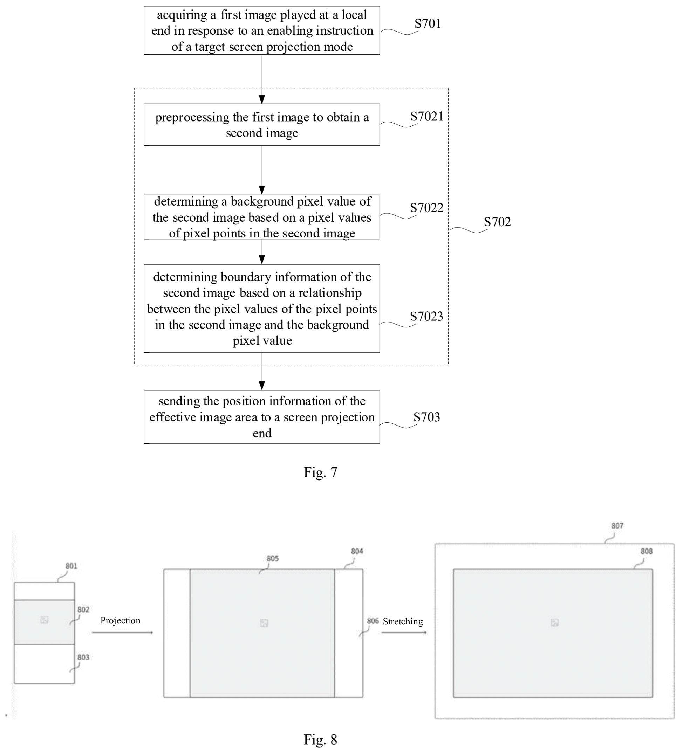

For example, as shown in Fig. 8, the first image displayed on the screen of the mobile phone 801 comprises an effective image area 802 and an area 803 where the image association information is located. The area 803 may be used to display associated content, or may display no information, that is, a blank area.

Since the effective image area in the first image is the content that needs to be projected, it is necessary to detect the effective image area and then determine the position information of the effective image area.

Step S602: determining position information of the effective image area in the first image.

The determination of the effective image area may be performed in combination with the service scenario of the current image. If the current service scenario is a live streaming scenario, the position information of the effective image area in the first image may be directly determined since the display position of the live streaming content on the terminal is known in the live streaming scenario.

If the current service scenario is not a live streaming scenario, image analysis may be performed on the first image, and the difference between the display content of the effective image area and the display content of the non-effective image area may be used to distinguish the effective image area from the non-effective image area, thereby determining the position information of the effective image area.

Without loss of generality, the effective image area is a closed rectangle, and accordingly, the position information of the effective image area may be represented by the coordinates of the closed rectangle in the first image. For example, the coordinates of four vertices of the closed rectangle, or the combination of the coordinates of the upper left vertex of the closed rectangle, the width of the closed rectangle, and the height of the closed rectangle, etc. Certainly, the position information of the effective image area may also be represented in other manners, which is not limited herein and may be specifically set according to actual requirements.

Step S603: sending the position information of the effective image area to a screen projection end.

The screen projection end is configured to stretch the effective image area and then play the stretched effective image area, and a screen size of the screen projection end is inconsistent with a screen size of the local end.

The electronic device acts as a sending end, and the screen projection end acts as a receiving end, and the communication between the two ends may send a custom instruction through a defined private communication protocol. The effective image area and whether the target screen projection mode is enabled may be communicated as an instruction. For example, the communication data comprises a screen projection mode and screen projection area information, the screen projection mode comprises but is not limited to the target screen projection mode and the non-target screen projection mode, and the screen projection area information comprises the effective image area or all areas.

Exemplarily, in the target screen projection mode, the screen projection area information is the effective image area, which may be represented by the coordinates of the effective image area, for example, the coordinates of the upper left corner and the coordinates of the lower right corner of the effective image area; or the coordinates of the upper left corner of the effective image area, the width of the effective image area, and the height of the effective image area. Certainly, other forms of representation may also be used, which is not limited herein. The target screen projection mode may comprise centering after equidistant stretching, cropping the excess after equidistant stretching, etc. The specific display manner is not limited herein.

For example, as shown in Fig. 8, the first image displayed on the mobile phone 801 comprises the effective image area 802 and the area 803 where the image association information is located. In the present embodiment, the area where the image association information is located is a blank area. Then, the position information of the effective image area 802 is determined on the mobile phone side, and the position information is sent to the screen projection end 804. The effective image area is determined by the screen projection end 804 based on the position information of the effective image area 802, and then the effective image area is equidistantly stretched to obtain the image 805. In Fig. 8, there is an area 803 below the effective image area 802 displayed by the mobile phone 801, but there is no corresponding blank area below the image 805 displayed by the screen projection end. This is because the effective image area 802 is equidistantly stretched at the screen projection end, and the area 803 is not involved in the stretching.

Further, as shown in Fig. 8, due to the different screen proportions between the mobile phone and the screen projection end, blank areas 806 may also appear after equidistant stretching. Therefore, the screen projection end may perform equidistant stretching based on the width and height of the screen to ensure that the stretched image may fill the entire screen. In Fig. 8, the image 807 is obtained after equidistant stretching based on the ability to fill the entire screen. Since the image 807 exceeds the screen size of the screen projection end, the image 807 is cropped to obtain the image 808.

It should be noted that in the present embodiment, since the effective image area is equidistantly stretched , even if the stretched image is subsequently cropped, the content in the central area may be ensured to be retained. In this manner, although part of the content in the image is cropped, the display of the main content is not affected.

In the non-target screen projection mode (that is, the simple stretching described above), the screen projection area information is all the areas displayed by the mobile phone. The screen projection area information at this time may be represented by a default value, or may be represented by the coordinates of the mobile phone screen, etc., which is not limited herein.

After receiving the information, the screen projection end performs processing in a player. For example, a player based on a computer program (ffmpeg) is configured to implement the effect of stretching a specified area. Certainly, the screen projection end may also perform stretching processing in other manners, which is not limited herein and may be specifically set according to actual requirements.

According to the screen projection method provided in the present embodiment, in the case where the target screen projection mode is enabled, the effective image area in the first image played at the local end is identified, the position information of the effective image area is determined, and the position information of the effective image area is sent to the screen projection end, so that the screen projection end stretches the effective image area and then plays the stretched effective image area. Thus, the image displayed on the screen projection end is a result of stretching the effective image area, the proportion of the effective image area in the image is increased when the image is displayed on the screen projection end, and therefore the screen projection effect is improved.

In the present embodiment, a screen projection method is provided, which may be used for the electronic device described above, such as a mobile phone, etc. Fig. 7 is a flowchart of the screen projection method according to the embodiments of the present disclosure. As shown in Fig. 7, the flow comprises the following steps.

Step S701: acquiring a first image played at a local end in response to an enabling instruction for a target screen projection mode.

The first image comprises an effective image area and image association information.

The first image played at the local end may be a picture or a certain image frame in a video. If the first image is a picture, the picture is determined as the first image.

In some optional implementations, if the current service scenario is a video playing scenario, the first image is an image frame in a target video, position information of the effective image area in other image frames in the target video is consistent with position information of the effective image area in the first image, and the other image frames are image frames , a playing time of which in the target video is after a playing time of the first image.

Since the effective image area of each video frame in the video is fixed, once the effective image area of a certain image frame in the video is determined, the position information of the effective image area may be applied to all subsequent image frames in the video. For example, the video comprises 10,000 image frames, and the first image is the second image frame. After the position information of the effective image area of the image frame is determined by the method provided in the embodiments of the present application, the obtained position information of the effective image area is applicable to the subsequent third image frame to the 10,000th image frame.

It should be understood that the video playing scenario comprises but is not limited to the playing of an offline video, the playing of an online video, etc.

In the video playing scenario, the effective image area only needs to be determined once, and the effective image areas of other image frames may follow the effective image area of the first image without repeated calculation, thus reducing the latency of screen projection.

For other details, reference may be made to step S601 of the embodiment shown in Fig. 6, which will not be repeated here.

Step S702: determining the position information of the effective image area in the first image.

Specifically, step S702 comprises the following steps.

Step S7021: preprocessing the first image to obtain a second image.

The preprocessing comprises converting the first image into a grayscale image and blurring the grayscale image to reduce noise. In the grayscale image, the noise usually appears as isolated pixel points randomly appearing in the image or having a large difference in grayscale value from surrounding pixels, or a sharp fluctuation of local grayscale value, etc. The blurring process may be performed by weighted averaging of neighborhood pixels, and the result of the weighted averaging is used as a new grayscale value of the pixel point, thereby obtaining the second image.

Step S7022: determining a background pixel value of the second image based on a pixel values of pixel points in the second image.

The background pixel value may be determined by statistically calculating a grayscale histogram of the second image, determining a distribution peak of pixel values, and determining the background pixel value based on the distribution peak. Alternatively, the second image may be divided into multiple local areas, and the mean or median of pixel values in each local area is statistically calculated to obtain the background pixel value belonging to the local area. On this basis, the local area is subsequently distinguished between background and non-background based on the background pixel value.

In some optional implementations, step S7022 comprises the following steps.

Step a1: acquiring endpoint pixel values of an image boundary in the second image.

Step a2: performing statistical analysis on the endpoint pixel values to determine the background pixel value.

Since the second image is a rectangular area, all the pixel points on the boundary of the rectangular area may be used as endpoint pixel points, or only the four vertices of the rectangular area may be used as endpoint pixel points, etc. The statistical analysis of the endpoint pixel points comprises but is not limited to the calculation of mean, median, and mode to determine the background pixel value.

The statistical analysis is performed on the endpoint pixel values of the image boundary in the second image, which improves the processing efficiency on the premise of ensuring the accuracy of the background pixel value.

Step S7023: determining boundary information of the second image based on a relationship between the pixel values of the pixel points in the second image and the background pixel value.

The boundary information is configured to characterize the position information of the effective image area.

After the background pixel value is determined, the pixel value of each pixel point in the second image may be compared with the background pixel value. If the pixel value of the pixel point is less than the background pixel value, the pixel point is a background pixel point; otherwise, the pixel point is a non-background pixel point. After the non-background pixel points are determined, a closed area may be determined for these non-background pixel points. For example, the coordinates of the non-background pixel points may be compared, and the closed area may be determined based on the coordinates, thereby determining the boundary information of the second image.

In some optional implementations, step S7023 comprises the following steps.

Step b1: performing binarization processing on the second image based on a numerical relationship between the pixel values of the pixel points in the second image and the background pixel value to obtain a third image, where a pixel value of a pixel points belonging to the background in the third image is a first pixel value, and a pixel value of pixel points belonging to non-background in the third image is a second pixel value.

Step b2: comparing position information of the second pixel value to determine position information of boundary pixel points belonging to the non-background in the third image.

Step b3: determining the boundary information of the second image based on the position information of the boundary pixel points.

After the background pixel value is determined, the pixel value of each pixel point in the second image is compared with the background pixel value. If the pixel value of the pixel point is less than the background pixel value, the pixel point is a background pixel point; otherwise, the pixel point is a non-background pixel point. After the background pixel points and the non-background pixel points are determined, the binarization processing is performed on the second image. In the third image obtained after the binarization processing, the pixel value of the background pixel points is the first pixel value (for example, 0), and the pixel value of the non-background pixel points is the second pixel value (for example, 255).

The boundary pixel points in the third image is determined by comparing the position information of the second pixel value. For example, a position range of the pixel points with the second pixel value in the third image in the horizontal direction and a position range of the pixel points with the second pixel value in the third image in the vertical direction are determined, the largest rectangle is fitted according to these position ranges, and the rectangle is used as the range of the effective image area. Accordingly, the coordinates of the rectangle are used to represent the boundary information of the second image.

The third image obtained after the binarization processing is identified for the background pixel point and the non-background pixel point by the background pixel value, thereby determining the position information of the boundary pixel points belonging to the non-background in the third image, and accurate boundary information may be obtained by using the position information.

In other optional implementations, if the current service scenario is a live streaming scenario, step S702 comprises: acquiring position information of a live streaming image in the first image to obtain the position information of the effective image area.

As described above, the position of the live streaming image on the screen of the mobile phone side is fixed and may be directly acquired. Therefore, the position information of the live streaming image in the first image may be directly acquired and used as the position information of the effective image area.

In the live streaming scenario, since the position of the live streaming image in the first image is fixed, it may be directly acquired. Therefore, the position information of the effective image area may be acquired without analyzing the live streaming scenario.

Step S703: sending the position information of the effective image area to a screen projection end.

The screen projection end is configured to stretch the effective image area and then play the stretched effective image area, and a screen size of the screen projection end is inconsistent with a screen size of the local end. For details, reference may be made to step S603 of the embodiment shown in Fig. 6, which will not be repeated here.

According to the screen projection method provided in the present embodiment, the first image is preprocessed to remove noise interference, and further, the background pixel value is determined by the pixel values of the pixel points in the second image, thereby improving the accuracy of the background pixel value. On this basis, the boundary information of the second image is determined, ensuring the reliability of the obtained boundary information.

In some optional implementations, the screen projection method further comprises the following steps.

Step c1: acquiring a first screen projection mode after a screen projection connection is established between the local end and the screen projection end.

Step c2: generating the enabling instruction for the target screen projection mode if the first screen projection mode is the target screen projection mode.

The local end initiates a connection with the screen projection end according to requirements, and after the screen projection connection is established, the first screen projection mode may be determined in an interactive manner, or the first screen projection mode may be determined before the connection is established. After the connection is established, screen projection processing is performed by acquiring the first screen projection mode.

If the first screen projection mode is the target screen projection mode, the generation of the enabling instruction for the target screen projection mode is triggered. If the first screen projection mode is the non-target screen projection mode, the generation of the enabling instruction for the non-target screen projection mode is triggered.

After the screen projection connection is established, the first screen projection mode may be determined in an interactive manner, that is, the enabling instruction for the corresponding screen projection mode may be generated.

In some optional implementations, the screen projection method further comprises the following steps.

Step d1: generating a disabling instruction of the target screen projection mode if a change in an image layout of an image played at the local end is detected in the target screen projection mode.

Step d2: sending position information of a fourth image played at the local end to the screen projection end in response to the disabling instruction, where the screen projection end is configured to play the fourth image.

In the target screen projection mode, the screen projection end plays the stretched effective image area. The image layout of the image played at the local end is detected, and if a change in the image layout is detected, the disabling instruction of the target screen projection mode is generated. For example, a change in the image layout represents that the current service scenario may change, and stretching based on the previous position information of the effective image area may lead to poor screen projection effect.

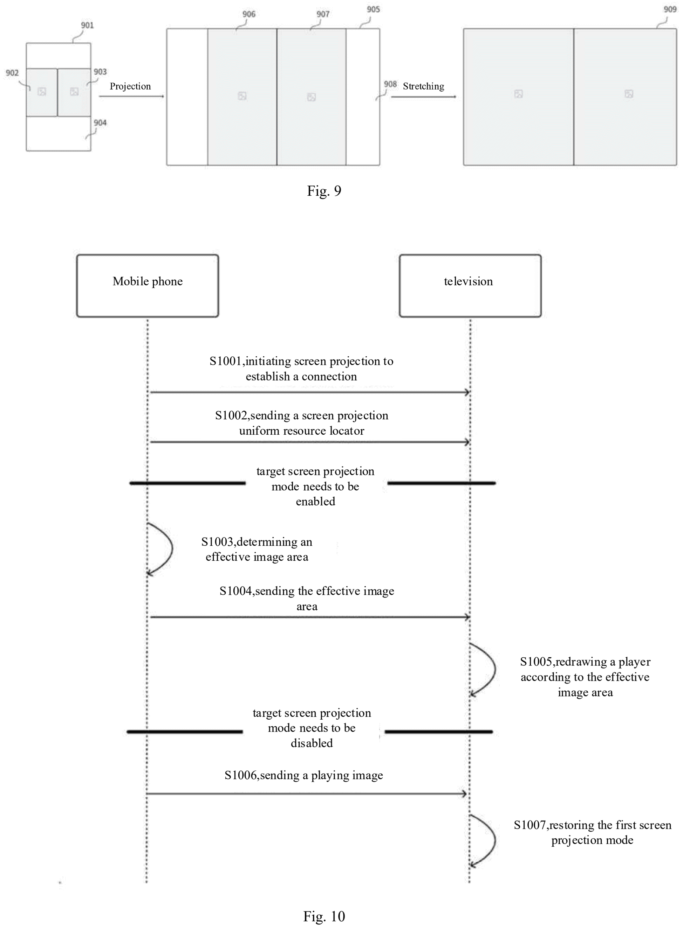

For example, as shown in Fig. 9, the image displayed on the mobile phone 901 is an image of live streaming competitive challenge, where a streamer 1 is displayed in an area 902, a streamer 2 is displayed in an area 903, and the area 904 may be a blank area. The effective image area of the image is detected, and it is determined that the area obtained by combining the area 902 and the area 903 is the effective image area, and the position information is sent to a television 905. After equidistant stretching is performed on the television side, an area 906 corresponding to the area 902 and an area 907 corresponding to the area 903 are obtained. Since the area 904 belongs to a non-effective image area, it is not displayed on the television image. In addition, due to the different screen proportions, a blank area 908 may appear after equidistant stretching, and after further equidistant stretching and cropping, the final image 909 is displayed on the television.

If it is currently detected that the streamer 2 is offline, the area 903 is correspondingly displayed as blank. If the previous position information of the effective image area continues to be used at this time, only part of the image will be displayed on the television side, and the other part will be blank. For example, the area 906 displays the corresponding image content, while the area 907 is displayed as blank.

Therefore, in the case where a change in the image layout of the image played at the local end is detected, the disabling instruction of the target screen projection mode is generated. The target screen projection mode is then disabled, and the position information of the fourth image played at the local end may be directly sent to the screen projection end, that is, the same image content as that of the local end is displayed on the screen projection end.

In the target screen projection mode, the image layout of the image played at the local end is detected, and if there is a change, the target screen projection mode is disabled, and the fourth image played at the local end is directly projected to the screen projection end. The number of interactions is reduced by automatically detecting and switching the screen projection mode.

In some optional implementations, the screen projection method further comprises the following steps.

Step e1: generating an enabling instruction for the first screen projection mode if the first screen projection mode is the non-target screen projection mode.

Step e2: sending position information of a fifth image played at the local end to the screen projection end in response to the enabling instruction for the first screen projection mode, where the screen projection end is configured to play the fifth image.

Step e3: generating the enabling instruction for the target screen projection mode in response to a change in an image layout of an image played at the local end being detected.

If the first screen projection mode is the non-target screen projection mode, the enabling instruction for the corresponding screen projection mode is generated, and the position information of the fifth image played at the local end is sent to the screen projection end, and the fifth image is played on the screen projection end. In this process, if a change in the image layout of the image played at the local end is detected, the target screen projection mode is automatically enabled, that is, the enabling instruction for the target screen projection mode is generated.

In the non-target screen projection mode, the fifth image played at the local end is projected and displayed on the screen projection end according to the first screen projection mode. If a change in the image layout of the image played at the local end is detected, the enabling instruction for the target screen projection mode is automatically generated, thereby realizing the automatic switching of the screen projection mode and improving the screen projection effect.

As a specific application embodiment of the embodiments of the present disclosure, the live streaming image of the mobile phone is projected to the television for display. As shown in Fig. 10, the screen projection method comprises the following steps.

Step S1001: a mobile phone initiates screen projection to establish a connection.

Step S1002: the mobile phone sends a screen projection uniform resource locator (URL). If it is detected that the target screen projection mode needs to be enabled, step S1003 is executed; otherwise, step S1006 is executed.

Step S1003: the mobile phone determines an effective image area.

Step S1004: the mobile phone sends the effective image area.

Step S1005: a television redraws a player according to the effective image area. If it is detected that the target screen projection mode needs to be disabled, step S1006 is executed. The disabling and enabling of the target screen projection mode are automatically realized by detecting whether the service scenario has changed.

Step S1006: the mobile phone sends a playing image.

Step S1007: the television restores the first screen projection mode. The first screen projection mode here is the non-target screen projection mode.

In the present embodiment, a screen projection apparatus is further provided, and the apparatus is configured to implement the above embodiments and preferred implementations, which will not be repeated here. As used below, the term "module" may implement a combination of software and/or hardware for a predetermined function. Although the apparatus described in the following embodiments is preferably implemented in software, implementation in hardware, or a combination of software and hardware is also possible and contemplated.

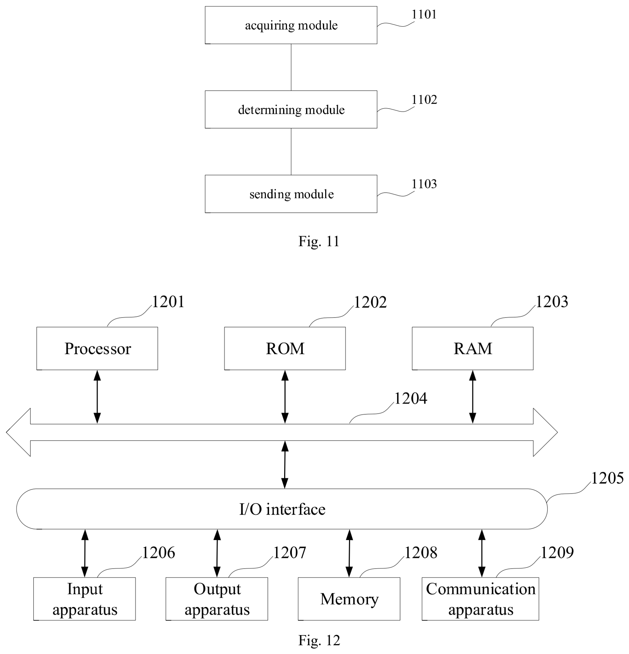

The present embodiment provides a screen projection apparatus, as shown in Fig. 11, comprising: an acquiring module 1101, configured to acquire a first image played at a local end in response to an enabling instruction for a target screen projection mode, where the first image comprises an effective image area and image association information; a determining module 1102, configured to determine position information of the effective image area in the first image; and a sending module 1103, configured to send the position information of the effective image area to a screen projection end, where the screen projection end is configured to stretch the effective image area and then play the stretched effective image area, and a screen size of the screen projection end is inconsistent with a screen size of the local end.

In some optional implementations, the determining module 1102 comprises: a preprocessing unit, configured to preprocess the first image to obtain a second image; a background determining unit, configured to determine a background pixel value of the second image based on pixel values of pixel points in the second image; and a boundary determining unit, configured to determine boundary information of the second image based on a relationship between the pixel values of the pixel points in the second image and the background pixel value, where the boundary information is configured to characterize the position information of the effective image area.

In some optional implementations, the background determining unit comprises: a pixel value acquiring subunit, configured to acquire endpoint pixel values of an image boundary in the second image; and a statistical analysis subunit, configured to perform statistical analysis on the endpoint pixel values to determine the background pixel value.

In some optional implementations, the boundary determining unit comprises: a binarization subunit, configured to perform binarization processing on the second image based on a numerical relationship between the pixel values of the pixel points in the second image and the background pixel value to obtain a third image, where a pixel value of pixel points belonging to the background in the third image is a first pixel value, and a pixel value of pixel points belonging to non-background in the third image is a second pixel value; a comparing subunit, configured to compare position information of the second pixel value to determine position information of boundary pixel points belonging to the non-background in the third image; and a boundary determining subunit, configured to determine the boundary information of the second image based on the position information of the boundary pixel points.

In some optional implementations, if the current service scenario is a live streaming scenario, the determining module 1102 comprises: an acquiring unit, configured to acquire position information of a live streaming image in the first image to obtain the position information of the effective image area.

In some optional implementations, if the current service scenario is a video playing scenario, the first image is an image frame in a target video, position information of the effective image area in other image frames in the target video is consistent with position information of the effective image area in the first image, and the other image frames are image frames , a playing time of which in the target video is after a playing time of the first image.

In some optional implementations, the screen projection apparatus further comprises: a screen projection mode determining module, configured to acquire a first screen projection mode after a screen projection connection is established between the local end and the screen projection end; and an enabling instruction generating module, configured to generate the enabling instruction for the target screen projection mode if the first screen projection mode is the target screen projection mode.

In some optional implementations, the screen projection apparatus further comprises: a disabling instruction generating module, configured to generate a disabling instruction of the target screen projection mode, in response to a change in an image layout of an image played at the local end being detected in the target screen projection mode; and a first sending module, configured to send position information of a fourth image played at the local end to the screen projection end in response to the disabling instruction, where the screen projection end is configured to play the fourth image.

In some optional implementations, the screen projection apparatus further comprises: an enabling instruction generating module, configured to generate an enabling instruction for the first screen projection mode in response to the first screen projection mode being a non-target screen projection mode; a second sending module, configured to send position information of a fifth image played at the local end to the screen projection end in response to the enabling instruction for the first screen projection mode, where the screen projection end is configured to play the fifth image; and a detecting module, configured to generate the enabling instruction for the target screen projection mode if a change in an image layout of an image played at the local end is detected.

The screen projection apparatus provided in the embodiments of the present disclosure may perform the screen projection method provided in any embodiment of the present disclosure, and has corresponding functional modules for performing the method and beneficial effects. In the case where the target screen projection mode is enabled, the apparatus identifies the effective image area in the first image played at the local end, determines the position information of the effective image area, and sends the position information of the effective image area to the screen projection end, so that the screen projection end stretches the effective image area and then plays the stretched effective image area. Thus, the image displayed on the screen projection end is a result of stretching the effective image area, the proportion of the effective image area in an image is increased when an image is displayed on the screen projection end, and therefore the screen projection effect is improved. Further functional descriptions of the modules and units described above are the same as those in the corresponding embodiments described above, and will not be repeated here.

Fig. 12 is a schematic structural diagram of an electronic device according to an embodiment of the present disclosure.

Reference is made specifically to Fig. 12 below, which illustrates a schematic structural diagram of an electronic device suitable for implementing the embodiments of the present disclosure. The electronic device may comprise a processor (such as a central processing unit, a graphics processor, etc.) 1201, which may perform various appropriate actions and processing according to a program stored in a read-only memory (ROM) 1202 or a program loaded from a memory 1208 into a random access memory (RAM) 1203. In the RAM 1203, various programs and data required for the operation of the electronic device are also stored. The processor 1201, the ROM 1202, and the RAM 1203 are connected to each other through a bus 1204. An input/output (I/O) interface 1205 is also connected to the bus 1204.

Generally, the following apparatuses may be connected to the I/O interface 1205: an input apparatus 1206 comprising, for example, a touch screen, a touchpad, a keyboard, a mouse, a camera, a microphone, an accelerometer, a gyroscope, etc.; an output apparatus 1207 comprising, for example, a liquid crystal display (LCD), a speaker, a vibrator, etc.; a memory 1208 comprising, for example, a magnetic tape, a hard disk, etc.; and a communication apparatus 1209. The communication apparatus 1209 may allow the electronic device to communicate wirelessly or in a wired way with other devices to exchange data. Although Fig. 12 shows an electronic device with various apparatuses, it should be understood that not all the apparatuses shown here need to be implemented or provided, and more or fewer apparatuses may be implemented or provided alternatively.

In particular, according to the embodiments of the present disclosure, the process described above with reference to the flowchart may be implemented as a computer software program. For example, the embodiments of the present disclosure comprise a computer program product comprising a computer program carried on a non-transitory computer-readable medium, where the computer program comprises program codes for performing the method shown in the flowchart. In such an embodiment, the computer program may be downloaded and installed from the network through the communication apparatus 1209, or installed from the memory 1208, or installed from the ROM 1202. When the computer program is executed by the processor 1201, the functions defined in the screen projection method of the embodiments of the present disclosure are executed.

The electronic device shown in Fig. 12 is only an example, and should not impose any limitation on the functions and application scope of the embodiments of the present disclosure.

The embodiments of the present disclosure further provide a computer-readable storage medium. The method according to the embodiments of the present disclosure described above may be implemented in hardware and firmware, or implemented as computer codes that may be recorded on a storage medium or originally stored in a remote storage medium or a non-transitory machine-readable storage medium and downloaded through a network and then stored in a local storage medium. Thus, the method described herein may be processed by such software stored on a storage medium using a general-purpose computer, a dedicated processor, or programmable or dedicated hardware. The storage medium may be a magnetic disk, an optical disk, a read-only memory, a random access memory, a flash memory, a hard disk, or a solid-state disk, etc. Further, the storage medium may also comprise a combination of the memories of the types described above. It may be understood that the computer, the processor, the microprocessor controller or the programmable hardware comprises a storage component that may store or receive software or computer codes, and when the software or computer codes are accessed and executed by the computer, the processor or the hardware, the screen projection method shown in the above embodiments is implemented.

A part of the present disclosure may be applied as a computer program product, such as computer program instructions, which, when executed by a computer, may invoke or provide the method and/or technical solution according to the present disclosure through the operation of the computer. A person skilled in the art should understand that the computer program instructions may exist in a computer-readable medium in forms comprising but not limited to a source file, an executable file, an installation package file, etc., and accordingly, the computer program instructions may be executed by the computer in manners comprising but not limited to: the computer directly executes the instructions, or the computer compiles the instructions and then executes the corresponding compiled program, or the computer reads and executes the instructions, or the computer reads and installs the instructions and then executes the corresponding installed program. Here, the computer-readable medium may be any available computer-readable storage medium or communication medium accessible by the computer.

Although the embodiments of the present disclosure are described with reference to the drawings, a person skilled in the art may make various modifications and variations without departing from the scope of the present disclosure, and such modifications and variations fall within the scope of the invention, which is defined by the appended claims.

## Claims

1. A screen projection method, comprising:
acquiring a first image played at a local end in response to an enabling instruction for a first screen projection mode, wherein the first image comprises an effective image area and image association information;
determining position information of the effective image area in the first image; and
sending the position information of the effective image area to a screen projection end, wherein the screen projection end is configured to stretch the effective image area and then play the stretched effective image area, and a screen size of the screen projection end is inconsistent with a screen size of the local end.

2. The screen projection method of claim 1, wherein the determining the position information of the effective image area in the first image comprises:
preprocessing the first image to obtain a second image;
determining a background pixel value of the second image based on pixel values of pixel points in the second image; and
determining boundary information of the second image based on a relationship between the pixel values of the pixel points in the second image and the background pixel value, wherein the boundary information is configured to characterize the position information of the effective image area.

3. The screen projection method of claim 2, wherein the determining the background pixel value of the second image based on the pixel values of the pixel points in the second image comprises:
acquiring endpoint pixel values of an image boundary in the second image; and
performing statistical analysis on the endpoint pixel values to determine the background pixel value.

4. The screen projection method of claim 2 or 3, wherein the determining the boundary information of the second image based on the relationship between the pixel values of the pixel points in the second image and the background pixel value comprises:
performing binarization processing on the second image based on a numerical relationship between the pixel values of the pixel points in the second image and the background pixel value to obtain a third image, wherein a pixel value of pixel points belonging to the background in the third image is a first pixel value, and a pixel value of pixel points belonging to non-background in the third image is a second pixel value;
comparing position information of the second pixel value to determine position information of boundary pixel points belonging to the non-background in the third image; and
determining the boundary information of the second image based on the position information of the boundary pixel points.

5. The screen projection method of any of claims 1 to 4, wherein the determining the position information of the effective image area in the first image comprises:
acquiring position information of a live streaming image in the first image to obtain the position information of the effective image area, in response to a current service scenario being a live streaming scenario.

6. The screen projection method of any of claims 1 to 5, wherein the first image is an image frame in a first video, position information of the effective image area in other image frames in the first video is consistent with position information of the effective image area in the first image, and the other image frames are image frames, a playing time of which in the first video is after a playing time of the first image, in response to a current service scenario being a video playing scenario.

7. The screen projection method of any of claims 1 to 6, further comprising:
acquiring a screen projection mode after a screen projection connection is established between the local end and the screen projection end; and
generating the enabling instruction for the first screen projection mode in response to the acquired screen projection mode being the first screen projection mode.

8. The screen projection method of claim 7, further comprising:
generating a disabling instruction of the first screen projection mode, in response to a change in an image layout of an image played at the local end being detected, in the first screen projection mode; and
sending position information of a fourth image played at the local end to the screen projection end in response to the disabling instruction, wherein the screen projection end is configured to play the fourth image.

9. The screen projection method of claim 7 or 8, further comprising:
generating an enabling instruction for the acquired screen projection mode in response to the acquired screen projection mode being a second screen projection mode, wherein the second screen projection mode is different from the first screen projection mode;
sending position information of a fifth image played at the local end to the screen projection end in response to the enabling instruction for the acquired screen projection mode, wherein the screen projection end is configured to play the fifth image; and
generating the enabling instruction for the first screen projection mode in response to a change in an image layout of an image played at the local end being detected.

10. The screen projection method of any of claims 7 to 9, wherein acquiring a screen projection mode after a screen projection connection is established between the local end and the screen projection end comprises:
determining the screen projection mode in an interactive manner; or
acquiring the screen projection mode, the screen projection mode being determined before the connection is established.

11. The screen projection method of any of claims 1 to 10, wherein the effective image area is configured to characterize the area to be projected.

12. A screen projection apparatus, comprising:
an acquiring module, configured to acquire a first image played at a local end in response to an enabling instruction of a first screen projection mode, wherein the first image comprises an effective image area and image association information;
a determining module, configured to determine position information of the effective image area in the first image; and
a sending module, configured to send the position information of the effective image area to a screen projection end, wherein the screen projection end is configured to stretch the effective image area and then play the stretched effective image area, and a screen size of the screen projection end is inconsistent with a screen size of the local end.

13. An electronic device, comprising:
at least one memory and at least one processor, wherein the at least one memory and the at least one processor are communicatively connected to each other, the at least one memory stores computer instructions, and the at least one processor executes the computer instructions to perform the screen projection method of any of claims 1 to 11.

14. A computer-readable storage medium, wherein the computer-readable storage medium stores computer instructions, and the computer instructions are used to cause a computer to perform the screen projection method of any of claims 1 to 11.

15. A computer program product, comprising computer instructions, wherein the computer instructions are used to cause a computer to perform the screen projection method of any of claims 1 to 11.
